Europäisches Patentamt

European Patent Office

Office européen des brevets

(19)

(11) **EP 0 542 607 B1**

(12) **FASCICULE DE BREVET EUROPEEN**

(45) Date de publication et mention
de la délivrance du brevet:
**14.05.1997 Bulletin 1997/20**

(51) Int Cl.⁶: **H04N 5/217**, H04N 5/33

(21) Numéro de dépôt: **92403008.3**

(22) Date de dépôt: **06.11.1992**

(54) **Procédé de correction de défauts dans une caméra à balayage optomécanique, et caméra mettant en oeuvre ce procédé**

Verfahren zur Korrektion von Fehlern in einer optomechanischen Abtastungskamera und Kamera für dieses Verfahren

Method for correcting errors in a scanning optomechanical camera and a camera utilising this method

(84) Etats contractants désignés:
**DE FR GB IT**

(30) Priorité: **15.11.1991 FR 9114102**

(43) Date de publication de la demande:
**19.05.1993 Bulletin 1993/20**

(73) Titulaire: **THOMSON-CSF**
**75008 Paris (FR)**

(72) Inventeurs:
• **Rouchon, Jean-Marc**
**F-92402 Courbevoie Cedex (FR)**
• **Ricci, Jean-Louis**
**F-92402 Courbevoie Cedex (FR)**
• **Grancoin, Bernard**
**F-92402 Courbevoie Cedex (FR)**

• **Vintezou, Sylvie**
**F-92402 Courbevoie Cedex (FR)**
• **Dairon, Gilles**
**F-92402 Courbevoie Cedex (FR)**
• **Jouan, Michel**
**F-92402 Courbevoie Cedex (FR)**

(74) Mandataire: **Courtellemont, Alain et al**
**THOMSON-CSF-S.C.P.I.,**
**13, Avenue du Président**
**Salvador Allende**
**94117 Arcueil Cédex (FR)**

(56) Documents cités:
**EP-A- 0 289 265**     **US-A- 4 298 887**
**US-A- 4 698 685**

## Description

La présente invention se rapporte à la correction des défauts de l'image fournie par le détecteur d'une caméra à détecteur et concerne en particulier, mais non exclusivement, les caméras thermiques à balayage optomécanique.

Lorsqu'une scène est observée à l'aide d'une caméra à balayage de type série, de type parallèle ou de type série parallèle, l'image que donnent les signaux du détecteur présente des défauts. Ainsi un fond uniforme observé avec une caméra ne donne pas, à la sortie de la caméra, une image uniforme mais une image dont le signal peut varier le long d'une ligne et d'une ligne à l'autre et peut évoluer, en général de façon périodique, entre le haut et le bas de l'image.

Pour corriger ces défauts il a été proposé de soustraire à l'image d'une scène donnée par les signaux du détecteur, une image mise en mémoire et obtenue en visant un fond uniforme.

Les résultats obtenus par un tel procédé ne sont pas toujours satisfaisants. Quand ils ont recherché la raison de cet inconvénient, les inventeurs ont montré, expérimentation à l'appui, que l'amplitude des défauts était liée à la différence de température entre la caméra et la scène observée. Or le fond uniforme qui sert à réaliser l'image de correction mise en mémoire, n'est généralement pas à la même température que la scène dont l'image donnée par le détecteur est à observer ; ceci explique que, en général, la correction n'est pas satisfaisante.

Une autre façon de corriger les défauts d'une caméra est exposé dans le document EP-A-0 289 265 qui décrit une caméra thermique comportant un détecteur fait d'éléments de détection qui délivrent chacun des signaux de détection correspondant à des points image d'une scène observée par la caméra. Pour tout élément de détection une intégration est effectuée, à période régulière, sur une partie des signaux qu'il fournit et le signal d'intégration est mis en mémoire. Ce signal mis en mémoire sert de signal de correction de sensibilité pour l'élément de détection dont il est issu ; pour cela il est soustrait des signaux de détection issus de l'élément de détection considéré et les signaux ainsi obtenus constituent les signaux corrigés de points image. Or, en tout point du champ analysé, le signal issu d'un élément de détection est modulé par une composante utile et une composante parasite, cette dernière étant d'autant plus gênante que la dispersion de sensibilité entre les éléments de détection est grande et que l'écart de température entre la scène observée et la structure de la caméra est grande; en effet le signal de modulation $V_d$ d'un élément de détection peut s'écrire

$$V_d = V_u + f(V_u - V_s)$$

avec $V_u$ signal de modulation dû au flux utile, c'est-à-dire au flux de scène, $V_s$ signal de modulation dû au flux de structure de la caméra et f fonction de transfert variant en relation avec les dispersions de sensibilité des éléments de détection, de la position spatiale du point considéré dans la scène et de l'écart de température entre la scène et la caméra. Comme la correction consiste à soustraire au signal $V_d$ un signal calculé à partir de la valeur moyenne de $V_d$, cette correction présente un défaut majeur, à savoir de ne pas faire la différence entre le signal utile et le signal parasite, étant donné que le signal de correction est une moyenne du signal "utile + parasite".

Le but de la présente invention a été d'éviter ces inconvénients de l'art connu.

La présente invention propose pour cela d'extraire du signal $V_d$ la seule partie parasite, la destructuration de la scène présentant en effet l'avantage, dans le cas présent, d'éliminer le signal utile et de ne conserver que la partie parasite.

La façon de procéder est indiquée dans la revendication 1, du présent document, qui décrit le procédé selon l'invention.

La structure d'une caméra basée sur cette façon de procéder est indiquée dans la revendication 7 du présente document.

La présente invention sera mieux comprise et d'autres particularités apparaîtront lors de la description ci-après et dans les figures annexées qui représentent:

- la figure 1, une vue schématique d'une caméra pour la mise en oeuvre du procédé selon l'invention ;
- la figure 2, un schéma électrique d'un montage pour la mise en oeuvre du procédé dans une caméra comme celle selon la figure 1.

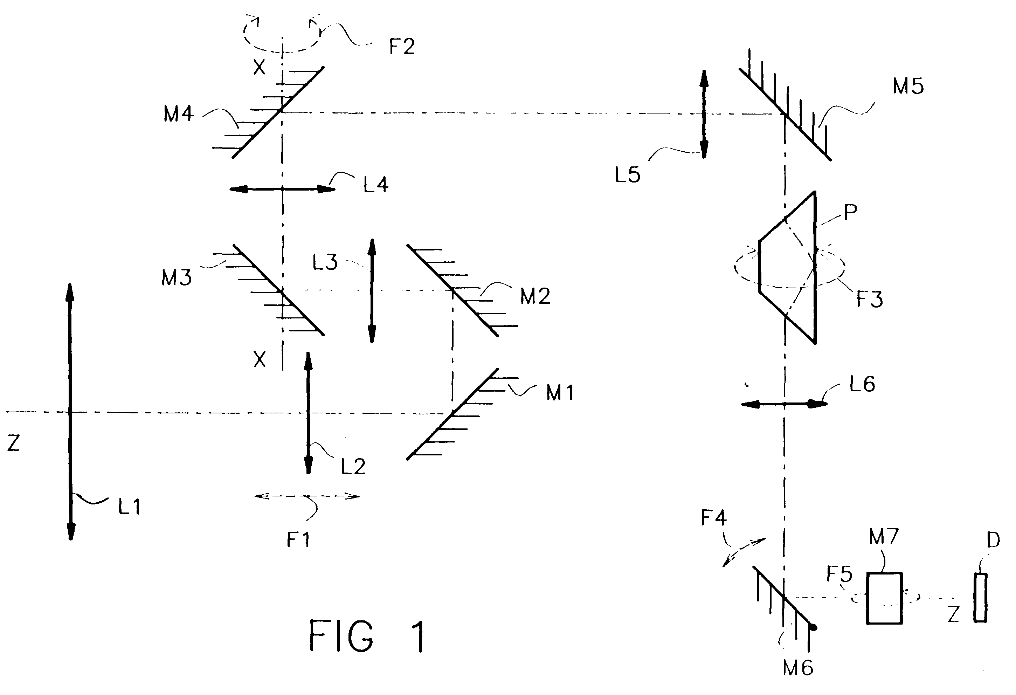

La figure 1 est un schéma simplifié d'une caméra qui, dans la réalisation ayant servi d'exemple à la présente description, est une caméra thermique travaillant dans la bande 8-12 microns avec un détecteur, D, fait d'une mosaïque de 4 x 11 capteurs infrarouges. Dans le schéma selon la figure 1 les lentilles ou groupes de lentilles ont été représentés, par souci de simplification, par le symbole d'une lentille convergente ; ainsi apparaissent six lentilles convergentes L1 à L6. Ces lentilles, en association avec sept miroirs M1 à M7 et un prisme dit prisme dérotateur, P, définissent des trajets optiques tels que le trajet ZZ entre la scène qui se trouve dans le champ de la caméra et le détecteur D.

La caméra présente, de façon connue, des ensembles mécaniques non représentés qui permettent

- de modifier la focalisation de la caméra par un mouvement de translation de la lentille L2 ; ce mouvement est symbolisé par une double flèche F1 sur la figure 1,
- d'effectuer un déplacement en site de la ligne de visée de la caméra grâce à un mouvement de rotation autour d'un axe XX ; ce mouvement qui est symbolisé par une double flèche F2 sur la figure 1, fait tourner l'ensemble constitué par les lentilles L1 à L3 et les miroirs M1 à M3, autour de l'axe XX,

- de faire tourner l'image obtenue à l'aide de la caméra, grâce au prisme dérotateur P dont le but est de faire que, par exemple lorsque la caméra est embarquée dans un avion, l'image fournie au pilote présente toujours une ligne d'horizon parallèle au bas de l'image quelle que soit la position de l'avion ; ce mouvement est symbolisé par une double flèche F3 sur la figure 1,

- d'effectuer un balayage du champ objet, en trame par le miroir M6, en ligne par le miroir M7 qui est un miroir à facettes.

Pour élaborer des signaux de correction de l'image fournie par la caméra, le procédé qui va être décrit ci-après consiste tout d'abord, non pas à mettre devant la caméra un cache constitué par un fond gris uniforme comme il est classique de le faire, mais à pointer la caméra en direction de la scène à observer et à effectuer une destructuration de l'image par des modifications incohérentes des réglages de la caméra. Cette façon de procéder est destinée à permettre d'obtenir des signaux de correction en fonction de la différence de température entre la scène à observer et la caméra et de faire que ces signaux soient uniquement modulés par les défauts à corriger et non pas aussi par la scène observée. Pour effectuer cette destructuration de l'image les opérations suivantes sont effectuées simultanément, dans un laps de temps un peu inférieur à deux secondes :

- déplacement continu de la lentille L2 pour obtenir une défocalisation au niveau du plan image,

- rotation autour de l'axe XX pour déplacer la ligne de visée de haut en bas du site 0 degré au site -45 degrés,

- rotation d'image par action sur le prisme dérotateur P.

La caméra fournit des trames de parité paire et impaire, formées de signaux correspond à des points de coordonnées fixes bien définies dans l'image. Or l'expérience montre que la variation des défauts à corriger est relativement lente le long d'une ligne ou d'une colonne. C'est pourquoi dans l'exemple de réalisation, afin de simplifier l'obtention des signaux de correction, ces signaux ne sont déterminés directement que pour les trames d'une des deux parités données, en l'occurrence ici les trames paires, et que pour un point sur n par ligne, avec n entier supérieur à 1 ; dans l'exemple décrit n est égal à 4.

Cette détermination directe est effectuée, pendant la destructuration de l'image, à l'aide de m trames de même parité, avec m égal à 48 dans l'exemple décrit ; les signaux de correction pour des points donnés (1 sur n par ligne) des trames d'une parité donnée (paire dans l'exemple décrit), sont obtenus

- en sommant, pour chaque point donné dans les m trames selon la parité donnée, les m signaux relatifs à ce point donné,

- en divisant le résultat obtenu, pour chaque point donné, par le nombre m de signaux sommés, afin d'obtenir un signal moyen pour chaque point donné

- en déterminant le niveau de luminance minimum parmi tous ces signaux moyens et en le retranchant au niveau de chacun de ces signaux moyens.

A ce stade des opérations une trame de correction de parité donnée est obtenue, mais cette trame est incomplète puisqu'elle ne comporte des signaux de correction que pour un point sur n par ligne. Profitant de ce que la variation des défauts le long d'une ligne est lente, le signal de correction relatif à un point manquant dans la trame de correction de parité donnée, est obtenu par une interpolation sur les signaux de correction relatifs aux deux points déjà traités qui sont les plus proches, sur la ligne, du point manquant. Et c'est en profitant de ce que la variation des défauts le long d'une colonne est lente que, dans l'exemple décrit, la trame de correction de la parité autre que la parité donnée est prise identique à la trame de correction de parité donnée.

La correction de l'image à observer peut alors commencer en retranchant au signal de chaque point de l'image le signal de correction précédemment déterminé pour ce même point. Au cours de cette correction il arrive qu'un signal de correction ait un niveau supérieur au niveau du signal à corriger ; dans ce cas, afin d'éviter une inversion de luminance, le niveau du signal corrigé est pris égal à zéro.

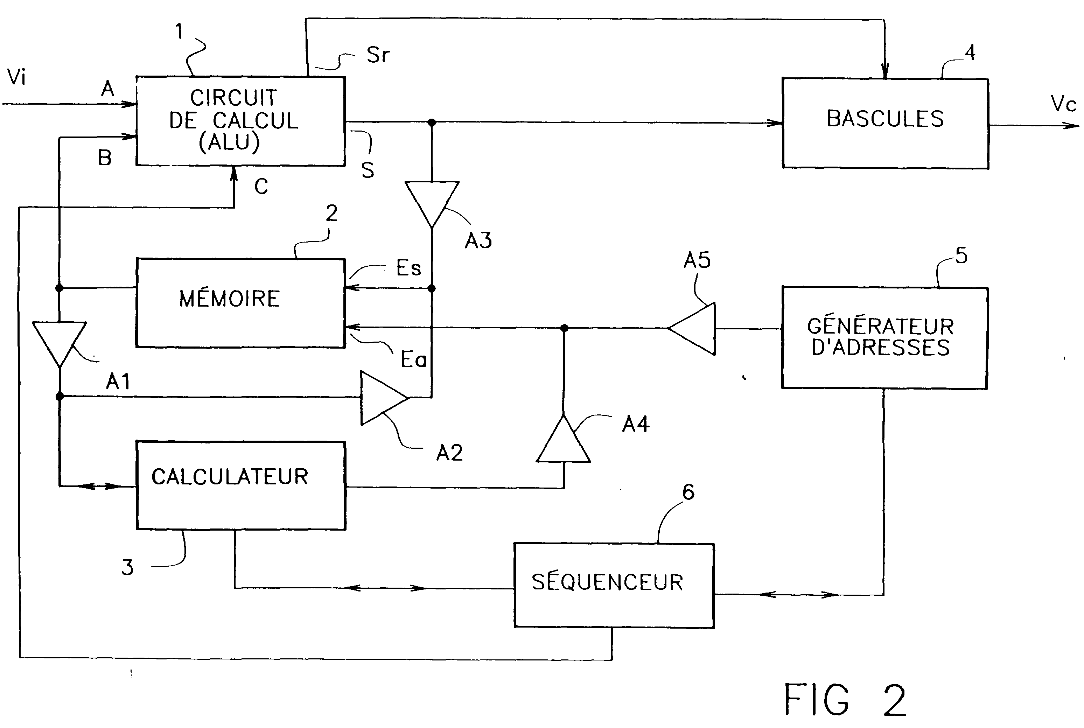

La figure 2 est un schéma des circuits électroniques permettant la mise en oeuvre du procédé de correction décrit ci-avant. Dans ce schéma les dispositifs de synchronisation précise, relevant de la technologie courante, n'ont pas été représentés en vue de rendre le dessin plus clair et de simplifier l'exposé, Ce schéma correspond d'ailleurs en tous points à un schéma pour la mise en oeuvre du procédé de correction de défauts selon l'art connu, dans lequel les signaux de correction sont obtenus en interposant devant la caméra un cache constitué par un fond gris uniforme ; les différences résident dans les traitements effectués pour aboutir aux signaux de correction d'image.

La figure 2 montre un circuit de calcul 1 du type unité arithmétique et logique, aussi appelé ALU d'après le sigle de sa dénomination dans la littérature anglosaxonne : "arithmetic and logic unit". Le circuit 1 comporte deux entrées A, B et reçoit sur son entrée A le signal vidéo Vi obtenu lors du balayage en trame ; ce signal Vi est un signal numérique obtenu à la sortie d'un convertisseur analogique-numérique, non représenté, à partir des signaux fournis par le détecteur D selon la figure 1. Il est à noter que, sur la figure 2 toutes les liaisons ont été représentées à l'aide d'un seul conducteur pour simplifier le schéma et bien que plusieurs d'entre elles soient des liaisons multifilaires ; ainsi par exemple, les liaisons qui aboutissent aux entrées A et B du circuit 1 sont des liaisons prévues pour transmettre huit bits en parallèle dans l'exemple décrit.

Le circuit 1 possède une entrée de commande, C, pour commander son fonctionnement en additionneur ou en soustracteur c'est-à-dire pour lui faire effectuer soit la somme soit la différence, qui seront notées respectivement A+B et A-B, des signaux qui seront appelés A et B et qui sont respectivement présents, à un instant donné, sur ses entrées A et B. Le circuit 1 possède une sortie principale, S, pour fournir la valeur absolue de A+B ou de A-B, selon le mode de fonctionnement choisi et une sortie de signe, Sr, qui donne le signe du résultat de l'opération effectuée par le circuit 1 ; comme A et B sont, de par la réalisation de la caméra, toujours positifs, le signe du résultat de l'opération effectuée par le circuit 1 est toujours positif sauf pour l'opération A-B lorsque B est plus grand que A.

Des bascules, 4, montées en parallèle ont leurs entrées de signal reliées par une liaison multifilaire à la sortie S du circuit 1, une entrée de remise à zéro commune reliée à la sortie de signe, Sr, du circuit 1 et leurs sorties qui fournissent par une liaison multifilaire le signal corrigé Vc.

Une mémoire d'image 2, qui comporte une entrée de signal Es et une entrée d'adressage Ea, a une sortie reliée à l'entrée B du circuit 1 et à l'entrée d'un amplificateur A1.

Un calculateur 3 comporte une sortie reliée par un amplificateur A4 à l'entrée d'adressage, Ea, de la mémoire 2 et deux accès bidirectionnels dont le premier est relié à la sortie de l'amplificateur A1 et à l'entrée de l'amplificateur A2 pour respectivement recevoir et fournir des signaux d'image à la mémoire 2.

Un séquenceur, 6, comporte un premier accès bidirectionnel relié au second accès bidirectionnel du calculateur 3, un second accès bidirectionnel et une sortie reliée à l'entrée C qui commande le fonctionnement du circuit de calcul 1 soit en additionneur soit en soustracteur.

Un générateur d'adresses 5 est relié par un amplificateur A5 à l'entrée d'adressage, Ea, de la mémoire 2 et par un accès bidirectionnel au second accès bidirectionnel du séquenceur 6.

Le procédé de correction de défauts, tel qu'il a été décrit plus avant, est mis en oeuvre, comme indiqué ci-après.

Pour acquérir la trame de correction de défauts dont il a été question, le circuit de calcul 1 est programmé en additionneur et la mémoire 2 est pilotée par le générateur d'adresses 5 qui fournit successivement les adresses des différents points des trames paires et impaires. La destructuration de l'image coïncide avec le fonctionnement en additionneur du circuit 1 et, pendant cette première étape du procédé, m, avec m entier donné, trames de même parité sont sommées dans la mémoire 2 en ne considérant qu'un point sur n par ligne.

Lors de l'étape suivante qui commence dès que la somme des m trames est terminée, la mémoire 2 n'est plus pilotée par le générateur d'adresses mais par le calculateur qui divise les valeurs ainsi obtenues en mémoire par le nombre m des trames additionnées ; puis le calculateur recherche la valeur du signal minimum contenu en mémoire ; quand il l'a trouvé il la retranche à la valeur de tous les autres signaux contenus en mémoire. A ce moment la trame de correction contenue dans la mémoire 2, ne comporte de signaux de corrections que pour un point sur n par ligne. Le calculateur complète cette trame en calculant le signal de chacun des autres points de la trame de correction ; le signal pour un point donné d'une ligne donnée est calculé par interpolation sur les valeurs des signaux de correction relatifs aux deux points de la ligne donnée qui, parmi les points les plus proches du point donné, ont déjà leur signal de correction dans la mémoire 2.

L'acquisition de la trame de correction est terminée ; la caméra peut alors être réglée pour observer la scène sur laquelle s'est effectuée l'acquisition par destructuration. Le circuit de calcul 1 est alors programmé en soustracteur par le séquenceur 6 et la mémoire 2 est à nouveau pilotée par le générateur d'adresses. La correction est réalisée en soustrayant au signal vidéo correspondant à un point de trame et qui arrive sur l'entrée A du circuit de calcul 1, le signal de correction relatif à ce point et contenu dans la mémoire 2.

Il est à noter que le générateur d'adresses 5 est en synchronisme avec le balayage en trame et ligne effectué à l'aide des miroirs M6 et M7 ; ce générateur permet donc de tenir compte des modes de fonctionnement (balayage normal, balayage partiel...) de la caméra pour réaliser un balayage de la mémoire 2 qui assure en permanence le synchronisme entre le signal vidéo Vi et le signal de correction correspondant extrait de la mémoire 2.

La présente invention n'est pas limitée à l'exemple décrit, c'est ainsi que la destructuration de l'image peut, par exemple, être obtenue dans le cas de la caméra selon la figure 1, en n'agissant que sur la défocalisation et la ligne de visée, voire que sur la défocalisation.

De même l'acquisition des signaux de correction peut être effectuée non pas par les trames d'une seule parité mais par les trames de chacune des deux parités, de façon à obtenir deux trames de correction distinctes : une pour les trames de parité paire et une pour les trames de parité impaire. Il est également possible d'effectuer l'acquisition non pas avec 1 point sur n par ligne de trame mais avec tous les points de la ligne de trame. Il est même possible d'effectuer l'acquisition non pas avec toutes les lignes d'une trame mais avec une ligne sur p, avec p entier supérieur à 1, puis les points des lignes manquantes sont calculés dans le calculateur par interpolation à partir des points des lignes les plus proches dont les valeurs des signaux de correction sont déjà connues.

Par ailleurs le procédé selon l'invention ne s'applique pas uniquement aux caméras thermiques du type de celle qui a été décrite à l'aide des figures 1 et 2 mais s'applique à toutes les caméras à balayage optomécanique, qu'elles soient thermiques ou qu'elles travaillent dans le domaine du visuel ou de l'ultra-violet.

## Revendications

1. Procédé de correction, dans une caméra à détecteur (D) et à balayage optomécanique, des défauts de l'image numérique en trames paires et impaires où les trames sont faites de points fixes de l'image, disposés en lignes et représentés par des valeurs numériques obtenues par conversion de valeurs analogiques fournies par le détecteur, *consistant* à viser une scène avec la caméra, caractérisé en ce qu'il consiste

   - à effectuer, pendant un laps de temps donné, une destructuration de l'image de la scène par des modifications (F1, F2, F3) incohérentes des réglages de la camera,
   - à prendre en compte, pendant le laps de temps donné, m, avec m entier positif, trames d'une même parité pour effectuer un calcul (3) d'une trame moyenne dont chaque point a sensiblement la valeur moyenne des valeurs numériques qu'il présente dans les m trames,
   - à mettre en mémoire (2) une trame de correction dont la valeur de chacun des points correspond à la valeur de chacun des points de la trame moyenne à une même valeur de constante près,
   - à donner un réglage correct (F1, F2, F3) à la caméra pour observer la scène,
   - à effectuer une soustraction (1), pour chaque point, entre la valeur de ce point dans une trame obtenue, avec le réglage correct, par conversion des valeurs analogiques fournies par le détecteur (D) et la valeur en mémoire (2) relative à ce point.

2. Procédé de correction selon la revendication 1, caractérisé en ce que la prise en compte pendant le laps de temps donné concerne un point sur n, avec n entier supérieur a 1, par ligne de trame et en ce que, dans la trame moyenne, pour les points autres que les points concernes, la valeur moyenne est calculée (3) par interpolation à partir des valeurs moyennes des points concernés les plus proches.

3. Procédé selon l'une des revendications précédentes, caractérisé en ce que la même valeur constante est la valeur la plus faible, affectée du signe moins, parmi les valeurs moyennes des points dans la trame moyenne.

4. Procédé selon la revendication 1, mis en oeuvre avec une caméra comportant un réglage de focalisation (F1), caractérisé en ce qu'il consiste à modifier, lors de la destructuration, la mise au point de la caméra.

5. Procédé selon la revendication 4, caractérisé en ce qu'il consiste à déplacer (F2) la ligne de visée de la caméra au cours de la destructuration.

6. Procédé selon la revendication 4 ou 5, mis en oeuvre avec une caméra comportant un prisme dérotateur (P), caractérisé en ce qu'il consiste à effectuer, lors de la destructuration, une rotation de l'image par action (F3) sur le prisme dérotateur.

7. Caméra à détecteur (D) suivi d'un convertisseur analogique-numérique et à balayage optomécanique, pour fournir des images numériques en trames paires et impaires faites de points fixes de l'image, disposés en lignes et représentés par des valeurs analogiques fournies par le détecteur et transformées en valeurs numériques par le convertisseur, caractérisée en ce qu'elle comporte

   - des ensembles mécaniques pour, après que la caméra ait été réglée sur une scène donnée, effectuer, pendant un laps de temps donné, des modifications (F1, F2, F3) incohérentes des réglages de la caméra,
   - des moyens de calcul (3) pour calculer une trame moyenne dont chaque point a sensiblement la valeur moyenne des valeurs numériques qu'il présente dans m trames d'une même parité, obtenues pendant le laps de temps donné, avec m entier positif,
   - des moyens de mise en mémoire (2) pour mettre en mémoire une trame de correction dont la valeur de chacun des points correspond à la valeur de chacun des points de la trame moyenne à une même valeur de constante près,
   - des moyens soustractifs (1) pour fournir, pour chaque point d'une image, alors que le réglage est correct, un signal corrigé égal à la différence entre la valeur fournie, pour ce point, par le convertisseur et celle fournie, pour ce point, par les moyens de mise en mémoire (2).

## Patentansprüche

1. Verfahren in einer Kamera mit Detektor (D) und optomechanischer Abtastung zum Korrigieren von Fehlern des digitalen Bildes aus geradzahligen und ungeradzahligen Teilbildern, wobei die Teilbilder aus festen Punkten des Bildes gebildet sind, die in Zeilen angeordnet und durch digitale Werte gegeben sind, die durch Umsetzung von vom Detektor gelieferten analogen Werten erhalten werden, bei welchem eine Szene mit der Kamera beobachtet wird, dadurch gekennzeichnet, daß es darin besteht,

- während eines gegebenen Zeitraums eine Zerlegung der Struktur des Bildes der Szene durch inkohärente Modifikationen (F1, F2, F3) der Kameraeinstellungen auszuführen,
- während des gegebenen Zeitraums m Teilbilder derselben Parität zu berücksichtigen, wobei m eine positive ganze Zahl ist, um eine Berechnung (3) eines gemittelten Teilbildes auszuführen, wovon jeder Punkt im wesentlichen den Mittelwert der digitalen Werte besitzt, die er in den m Teilbildern besitzt,
- ein Korrekturteilbild zu speichern (2), wovon der Wert jedes seiner Punkte bis auf einen konstanten Wert dem Wert jedes der Punkte des gemittelten Teilbildes entspricht,
- für die Kamera eine korrekte Einstellung (F1, F2, F3) vorzunehmen, um die Szene zu beobachten,
- für jeden Punkt zwischen dem Wert dieses Punkts in einem Teilbild, das bei korrekter Einstellung durch Umsetzung der vom Detektor (D) gelieferten analogen Werte erhalten wird, und dem auf diesen Punkt bezogenen Wert im Speicher (2) eine Subtraktion (1) auszuführen.

2. Korrekturverfahren nach Anspruch 1, dadurch gekennzeichnet, daß die Berücksichtigung während des gegebenen Zeitraums einen von n Punkten pro Zeile des Teilbildes betrifft, wobei n eine ganze Zahl größer als 1 ist, und daß im gemittelten Teilbild für die von den betroffenen Punkten verschiedenen Punkte der Mittelwert durch Interpolation ausgehend von den Mittelwerten der nächsten betroffenen Punkte berechnet (3) wird.

3. Verfahren nach einem der vorangehenden Ansprüche, dadurch gekennzeichnet, daß der gleiche konstante Wert der kleinste Wert der Mittelwerte der Punkte im gemittelten Teilbild, versehen mit negativem Vorzeichen, ist.

4. Verfahren nach Anspruch 1, das mit einer Kamera mit Brennweiteneinstellung (F1) ausgeführt wird, dadurch gekennzeichnet, daß es darin besteht, bei der Zerlegung der Struktur die Scharfstellung der Kamera zu modifizieren.

5. Verfahren nach Anspruch 4, dadurch gekennzeichnet, daß es darin besteht, die optische Achse der Kamera im Verlauf der Zerlegung der Struktur zu verschieben (F2).

6. Verfahren nach Anspruch 4 oder 5, das mit einer Kamera mit einem Derotator-Prisma (P) ausgeführt wird, dadurch gekennzeichnet, daß es darin besteht, bei der Zerlegung der Struktur eine Drehung des Bildes durch Einwirkung (F3) auf das Derotator-Prisma auszuführen.

7. Kamera mit Detektor (D), dem ein Analog/Digital-Umsetzer folgt, und mit optomechanischer Abtastung, um digitale Bilder in geradzahligen und ungeradzahligen Teilbildern zu liefern, die aus festen Punkten des Bildes gebildet sind, die in Zeilen angeordnet sind und durch analoge Werte gegeben sind, die vom Detektor geliefert und von Umsetzer in digitale Werte umgesetzt werden, dadurch gekennzeichnet, daß sie enthält:

- mechanische Einheiten, um nach der Einstellung der Kamera auf eine gegebene Szene während eines gegebenen Zeitraums inkohärente Modifikationen (F1, F2, F3) der Einstellungen der Kamera vorzunehmen,
- Rechenmittel (3), um ein gemitteltes Teilbild zu berechnen, wovon jeder Punkt im wesentlichen den Mittelwert der digitalen Werte besitzt, die er in m Teilbildern derselben Parität aufweist, die während des gegebenen Zeitraums erhalten werden, wobei m eine positive ganze Zahl ist,
- Speichermittel (2), um ein Korrekturteilbild zu speichern, wovon der Wert jedes Punkts bis auf einen konstanten Wert dem Wert jedes der Punkte des gemittelten Teilbildes entspricht,
- Subtraktionsmittel (1), um für jeden Punkt eines Bildes bei korrekter Einstellung ein korrigiertes Signal zu liefern, das gleich der Differenz zwischen dem vom Umsetzer gelieferten Wert für diesen Punkt und jenem Wert ist, der für diesen Punkt von den Speichermitteln (2) geliefert wird.

**Claims**

1. Method of correcting, in a camera with a detector (D) and optomechanical scanning, defects in the digital image, in even and odd frames, in which the frames are made up of fixed points of the image, arranged in lines and represented by digital values obtained by converting analogue values supplied by the detector, consisting in aiming the camera at a scene, characterized in that it consists

- in destructuring, for a given span of time, the image of the scene through incoherent modifications (F1, F2, F3) of the camera settings,
- in considering, for the given span of time, m, with m a positive integer, frames of like parity in order to perform a calculation (3) of a mean frame, each point of which has substantially the mean value of the digital values which this point exhibits in the m frames,

- in storing in memory (2) a correction frame, the value of each of the points of which corresponds to the value of each of the points of the mean frame to within a same value of a constant,

- in according the camera a correct setting (F1, F2, F3) in order to observe the scene,

- in performing a substraction (1), for each point, between the value of this point in a frame obtained, with the correct setting, by converting the analogue values supplied by the detector (D) and the value in memory (2) relating to this point.

2. Correction method according to Claim 1, characterized in that the consideration for the given span of time concerns one point out of n, with n an integer greater than 1, per frame line and in that, in the mean frame, for the points other than the points concerned, the mean value is calculated (3) by interpolation on the basis of the mean values of the nearest points concerned.

3. Method according to one of the preceding claims, characterized in that the same constant value is the smallest value, accompanied by the minus sign, out of the mean values of the points in the mean frame.

4. Method according to Claim 1, implemented with a camera including a focus setting (F1), characterized in that it consists in modifying, during the destructuring, the setup of the camera.

5. Method according to Claim 4, characterized in that it consists in shifting (F2) the line of sight of the camera during the destructuring.

6. Method according to Claim 4 or 5, implemented with a camera including a derotator prism (P), characterized in that it consists in performing, during the destructuring, a rotation of the image through action (F3) on the derotator prism.

7. Camera with a detector (D) followed by an analogue/digital converter and with optomechanical scanning, for supplying digital images, in even and odd frames, made up of fixed points of the image arranged in lines and represented by analogue values supplied by the detector and converted into digital values by the converter, characterized in that it includes

- mechanical assemblies for, after the camera has been adjusted with regard to a given scene, performing, for a given span of time, incoherent modifications (F1, F2, F3) of the camera settings,

- means of calculation (3) for calculating a mean frame, each point of which has substantially the mean value of the digital values which this point exhibits in m frames of like parity, which are obtained for the given span of time, with m a positive integer,

- means of storing in memory (2) for storing in memory a correction frame, the value of each of the points of which corresponds to the value of each of the points of mean frame to within a same value of a constant,

- subtractive means (1) for supplying, for each point of an image, while the setting is correct, a corrected signal equal to the difference between the value supplied, for this point, by the converter and that supplied, for this point, by the means for storing in memory (2).

FIG 1

FIG 2

EP 0 542 607 B1